# EUROPÄISCHE PATENTSCHRIFT

(11) **EP 2 555 014 B1**
(45) Veröffentlichungstag und Bekanntmachung des Hinweises auf die Patenterteilung: **28.02.2018**
(21) Anmeldenummer: 12401151.1
(22) Anmeldetag: 13.07.2012
(51) Int. Cl.: G01S 15/93, G01S 17/93, G01S 7/497

(54) **Verfahren zur Erfassung und Bewertung einer Ebene**
Method for detecting and evaluating a plane
Procédé de détection et d'évaluation d'un plan

(30) Priorität: 30.07.2011 DE 102011109051; 27.10.2011 DE 102011054852
(43) Veröffentlichungstag der Anmeldung: 06.02.2013
(73) Patentinhaber: Götting KG, 31275 Lehrte/Röddensen (DE)
(72) Erfinder: Götting, Hans-Heinrich, 31275 Lehrte/Röddensen (DE)
(74) Vertreter: Scheffler, Jörg

(56) Entgegenhaltungen:
- EP-A1- 0 913 751
- DE-A1- 19 518 978
- DE-A1- 19 934 670
- US-A1- 2006 072 914

## Beschreibung

Die Erfindung betrifft ein Verfahren zur Erfassung und Bewertung einer Ebene nach dem Oberbegriff des Anspruchs 1.

Mit Hilfe des Verfahrens sollen Ebenen erfasst werden und insbesondere festgestellt werden, ob Objekte oder Hindernisse in oder auf der Ebene vorhanden sind oder ob Fehler in der Ebene vorliegen.

Es ist bekannt Sensoren zur Erfassung von Objekten bzw. zur Erkennung von Hindernissen in einem Gefahrenbereich zu verwenden. Die Objekterfassung kann auch zur Positionsbestimmung bei Fahrzeugen genutzt werden. Hierfür bieten sich u.a. Ultraschall und auch Radarverfahren an. Größere Bedeutung haben jedoch Laser, insbesondere Laserscanner, gefunden. Es ist üblich, dass der Laser vertikal von einer sich drehenden, senkrecht stehenden Achse den Laserstrahl abstrahlt. Über die Reflektion an die vom Laserstrahl getroffenen Objekte wird die Entfernung gemessen. Die Funktionsfähigkeit des Laserscanners wird häufig durch Messungen an einer Referenzfläche, die sich in der Regel im rückwärtigen Teil des Gerätes befindet, geprüft.

Nachteilig bei diesem Verfahren ist, dass Körper mit einer sehr geringen Remission, also insbesondere schwarze Körper oder Löcher, nicht zuverlässig oder gar nicht erkannt werden. Auch Abgänge oder Löcher in der Fahrbahn werden ebenfalls nicht erkannt.

Die Laserscanner werden in der Regel relativ tief am Fahrzeug, z.T. in einer Höhe von 10 oder 20 cm über der Ebene, also der Fahrbahn, befestigt. Wenn das Fahrzeug nun nickt, z.B. beim Bremsen, oder die Fahrbahn ansteigt, kann die Fahrbahn fälschlicherweise als störendes Hindernis erkannt werden.

In stationären Einrichtungen, z.B. in der Zugangskontrolle, werden Laserscanner ebenfalls eingesetzt. Sobald ein Objekt, ein Fahrzeug oder eine Person, in diesen Bereich eindringt, wird dies als Störung oder als Alarm registriert.

Durch die DE 195 18 978 A1 ist ein Hinderniserfassungssystem für ein Kraftfahrzeug bekannt, mit dem nicht nur die Entfernung zu einem Gegenstand in Vorwärtsrichtung sowie dessen Breite, sondern auch dessen Höhe erfasst werden kann. Hierzu tastet ein flacher Laserstrahl einen Raum in Vorwärtsrichtung des Kraftfahrzeuges in der Horizontalrichtung ab. Weiterhin sind zwei Videokameras zum Aufnehmen eines Bildes eines Hindernisses vorgesehen, welches sich innerhalb eines Raumes befindet, der von dem flachen Laserstrahl überstrichen wird. Durch Vergleich der Videosignale wird eine Abweichung zwischen den durch beide Videosignale repräsentierten Bildern festgestellt, um so die Entfernung zum Hindernis auf der Grundlage des trigonometrischen Messprinzipes zu ermitteln. Eine Größenbestimmungseinheit vergleicht die Signale der Laserentfernungsmesseinheit und der Videoentfernungsmessschaltung, um hierdurch die Größe des Hindernisses zu bestimmen. Wenn ein Fehler entweder in der Laserentfernungsmesseinheit oder der Stereo-Videokameraeinheit auftritt, so ist zumindest noch die Information in Bezug auf die Entfernung zum Hindernis verfügbar.

Die EP 0 913 751 A1 beschreibt ein autonomes Fahrzeug mit mindestens einem Abstandssensor zur Erfassung von Objekten und Beschaffenheitsmerkmalen des Weges. Ein Laserscanner-Sensor dient dazu, Löcher im Boden oder kleine Hindernisse auf dem Boden zu erkennen. Dabei werden nicht im Sinne der vorliegenden Erfindung die erfassten Messwerte in Bezug auf eine erste Position als Referenzwerte genutzt und als Vergleichswerte für die erfassten Messwerte in Bezug auf eine zweite Position verwendet.

Die US 2006/072914 A1 betrifft eine für ein Kraftfahrzeug bestimmte Objekterkennungsvorrichtung zur Identifizierung bzw. Erfassung von Objekten. Die Objekterkennungsvorrichtung verfügt über einen aktiven Entfernungsmesser mit einer Flutlichteinheit, die ein Licht auf ein Zielobjekt abstrahlt und mit dem eine Entfernung zu dem Zielobjekt auf der Grundlage des reflektierten Lichtes bestimmt wird. Weiterhin hat die Objekterkennungsvorrichtung eine Stereokamera, um einen Abstand zu dem Zielobjekt auf der Grundlage der Bildinformation zu bestimmen. Außerdem hat die Objekterkennungsvorrichtung eine Erkennungseinheit, die das Zielobjekt auf der Grundlage des Ausgangssignals von dem aktiven Entfernungsmesser und des Ausgangssignals von der Stereokamera erkennt. Dabei können die Messwerte des aktiven Entfernungsmessers und der Stereokamera verglichen und bei einem großen Unterschied der jeweils erfassten Entfernung ein Warnsignal nach außen abgegeben werden.

Aus der DE 199 34 670 A1 ist ein Objektdetektionssystem bekannt, bei dem zumindest drei Objektdetektoren unterschiedliche Detektionsbereiche unterschiedlicher Reichweite aufweisen. Falls ein Zielobjekt im Überschneidungsbereich liegt, können die Messdaten verglichen werden. Als Objektdetektor kann beispielsweise ein LIDAR-Sensor eingesetzt werden.

Nachteilig bei den bekannten Verfahren ist, dass sie insbesondere in der Anwendung vor Fahrzeugen Objekte, insbesondere schwarze Objekte oder Löcher, nicht zuverlässig erkennen.

Der Erfindung liegt die Aufgabe zugrunde ein Verfahren zu schaffen, mit dem Objekte oder Hindernisse noch zuverlässiger erkannt werden.

Diese Aufgabe wird gemäß den Merkmalen des Patentanspruchs 1 dadurch gelöst, dass eine verzögerungs- und/oder beschleunigungsbedingte Neigung des Fahrzeuges als Differenzwert erfasst und von der Steuereinheit mit Geschwindigkeitsmessignalen verglichen wird.

Die Unteransprüche enthalten weitere, vorteilhafte Ausgestaltungen.
Unter Berücksichtigung der Höhe des Sensors über der Fahrbahnebene und der Neigung des Sensors, lässt sich zurückrechnen, dass die Referenzlinie mehr oder weniger je nach Ebenheit der Fahrbahnebene eine Gerade sein soll. Die gescannte Laserlinie (Ist-Werte) muss an sich innerhalb der Toleranz bleiben.

Die mit der Erfindung erzielten Vorteile bestehen insbesondere darin, dass die zu erfassende Ebene mit Referenzwerten verglichen werden kann, mit anderen Worten: Es bestehen Daten für eine Soll- Ebene, die mit der ermittelten Ebene, also der Ist- Ebene, verglichen werden können. Wenn zu große Abweichungen vorliegen oder keine Werte ermittelt werden können, kann die Ursache ein Objekt sein, wobei unter dem Begriff Objekt erfindungsgemäß Hindernisse beliebiger Art und Gestalt, Personen, Tiere sowie Fehler in der Beschaffenheit der Ebene, insbesondere der Fahrbahn, wie beispielsweise Ausnehmungen oder Vorsprünge verstanden werden sollen.

Die Übereinstimmung von Soll- und Ist- Werten zeigt an, dass keine Abweichung vorliegt. Damit kann auch die Funktion der Geräte bzw. des Verfahrens getestet werden, insbesondere wenn bspw. während der Fahrt eines Fahrzeugs, sich die Sollwerte ändern und die Ist- Werte entsprechend folgen. Mit regelmäßigen Funktionstests können höhere Sicherheitsstufen in der Auswertung erreicht werden.

Die allgemeine Ebene ist an sich unbegrenzt, ausgedehnt flach und zweidimensional. Die Erfassung beschränkt sich jedoch auf einen begrenzten Teil. Die Ebene ist also mind. durch den Erfassungsbereich der Sensorik oder durch andere benachbarte Ebenen praktisch begrenzt.

Eine Ebene, so auch die Referenzebene, lässt sich durch drei Punkte in der Ebene beschreiben. Bei der Prüfung der Ebene kann zunächst auch geprüft werden, ob zwei ermittelt Werte, also Entfernungswerte vom messenden Sensor zur Ebene, in dieser Ebene liegen. Mit zwei Werten lässt sich eine Gerade oder auch Linie beschreiben, die in der Ebene liegt. Die Qualität der Prüfung steigt, wenn viele Werte auf dieser Geraden mit den Referenzwerten übereinstimmen. Die Differenz von benachbart gemessenen Werten auf der Geraden kann ein Maß für die Rauigkeit oder Unebenheit sein, soweit die Differenz nicht auf einen Messfehler zurückzuführen ist.

Die Qualität der Ebene steigt weiter, wenn die Ebenheit zweidimensional vorliegt. Durch die Erfindung soll geprüft werden, ob die Ebenheit der Ebene möglichst vollständig vorliegt. Nachfolgend wird statt dem allgemeinen Begriff Ebene auch der Begriff Fahrbahnebene benutzt, weil die Bedeutung der Erfindung häufiger in der Objekt- und Hinderniserfassung vor Fahrzeugen zu sehen ist.

Die Ebene ist die Fläche, welche für die Beobachtung von Bedeutung ist. Die reale Ebene ist mehr oder weniger glatt und plan. Sie kann aber auch Bereiche mit unterschiedlichen Steigungen oder auch Sprüngen haben. Die Abweichungen von einer idealen Ebene können, je nach Anwendungen, in einem gewissen Maß tolerierbar sein. Größere Abweichungen, z.B. Sprünge, können sogar als Marke genutzt werden, wenn sie bekannt sind.

Bei stationären Anwendungen ist die Ebene unveränderlich, bei mobilen Anwendungen dagegen ändert sich die Ebene aus Sicht des fahrenden Fahrzeugs.
In der Anwendung mit Fahrzeugen ist die Hinderniserkennung auf der Ebene im Allgemeinen hauptsächlich in der Breite des Fahrzeugs und in der Länge des Anhalteweges vor dem Fahrzeug erforderlich.

Mit der Entfernungsmessung zur Ebene lassen sich relativ leicht größere Objekte, also auch Hindernisse, zuverlässig erkennen. Schwieriger wird es, wenn die Objekte auf der Ebene relativ flach und/oder klein sind. Dabei ist es erforderlich, das Objekt von Fahrbahnunebenheiten oder solchen Bereichen, in denen die Fahrbahn leicht ansteigt oder abfällt, zu unterscheiden. Solche Bereiche sind grundsätzlich befahrbar.

Auch wenn das Fahrzeug aufgrund von Beschleunigungen oder Verzögerungen eine Nickbewegung durchführt, wird sich die Ebene als näher oder weiter entfernt darstellen. Dies kann aber durch die Vorgabe einer bestimmten Toleranz zur absoluten Entfernung der Ebene geduldet werden. Bspw. kann das normale erwartete Entfernungsmaß 4m sein. Wenn dann die Fahrbahn durch Nicken, Wanken oder Anstieg oder Abfall scheinbar 3,80m oder 4,2m entfernt ist, kann dies durchaus akzeptabel sein. Die Ebene zumindest erscheint noch eben, wenn die ganze Fahrbahnebene eben ist oder zumindest eine Gerade quer über die Fahrbahn noch als Gerade wahrgenommen werden kann.

Vorteilhaft ist es, wenn auch noch ein kleineres Objekt, z.B. eine ausgestreckte Hand einer auf der Ebenen liegenden Person, zuverlässig erkannt wird. Mit nacheinander folgenden Messungen, z.B. bei einem Laserscan, hat man zwar evtl. keine gute absolute Genauigkeit, aber in der Regel eine relativ genaue, wiederholende Genauigkeit. Somit kann man dann auf der Ebene oder bei der Überprüfung der Geraden feststellen, dass sich hier ein Sprung von z.B. etwa einem Zentimeter erkennen lässt. Insbesondere, wenn links und rechts von der Hand, eine Vielzahl von Messungen die Anforderungen an die Gerade erfüllen und dann aber durch die Hand mehrere benachbarte Messungen diese Geradengleichung nicht erfüllen, lässt sich hier auf ein Objekt bzw. ein Hindernis schließen. Mit entsprechender Messanzahl ergibt sich eine statistisch belegbare Messzuverlässigkeit. Anstelle von Lasermessverfahren sind hierzu auch Lichtschnittverfahren geeignet.

Vorteilhaft ist auch, dass sich beim Übergang von Fahrbahnebene auf Hand und von Hand auf Fahrbahnebene jeweils ein relativ deutlicher Sprung ergibt. Dies unterstützt die Auswertung.

Es ist aber auch möglich, Beulen oder Dellen in der Fahrbahn zu erkennen, also Objekte, auch Hindernisse oder Fehler, die einen relativ flachen Anstieg gegenüber der Fahrbahn oder der Ebene haben. Hier sind die Kanten nicht zu erkennen, aber trotzdem hilft auch hier die Statistik diese Objekte nachzuweisen, dadurch dass mehrere benachbarte Messungen den Hinweis auf dieses Objekt verdichten. Der Begriff "Objekt" steht auch hier z.T. stellvertretend für Hindernis oder Fehler in der Ebene.

Weiterhin kann die Fahrbahn zum einen durch den Vergleich der gemessenen Werte (Ist-Werte) mit den Referenzwerten (Soll- Werten) überprüft werden. Dies gilt insbesondere, um grobe Abweichungen zu erkennen. Zum anderen bietet sich die zusätzliche Überprüfung von relativen Abweichungen im Vergleich zu der idealen Ebene an. Dies dient auch zur Detektion von kleinen Abweichungen. Wenn beide Verfahren - also die Bewertung der Ebene durch eine absolute Entfernungsmessung sowie der Ebenheit - ein Objekt am gleichen Ort feststellen, ergibt sich zusätzlich noch die Möglichkeit beide Verfahren gegenseitig zu überprüfen. Insbesondere an Referenz- oder Prüfobjekten müssen beide Verfahren das Objekt anzeigen.

Häufig offenbaren sich Objekte nicht nur dreidimensional oder in der Rauigkeit (Textur), sondern auch durch einen optischen Kontrast, z.B. durch eine andere Helligkeit oder Farbe. Deswegen bietet es sich an, ein Laserscannerverfahren mit einer Kamera zu kombinieren. Ebenso kann die Reflexion des Laserstrahls sowohl für die Entfernungsmessung genutzt werden, als auch um unterschiedliche Reflektivitäten von unterschiedlichen Oberflächen festzustellen (andere Helligkeit). Somit wird sich dann ein kleines Objekt, das man durch die Entfernungsmessung kaum darstellen kann, durch eine andere Helligkeit oder sogar einen Helligkeitssprung, deutlicher darstellen. Wenn die Entfernungsmessung, z.B. zu einer Hand auf der Fahrbahn, nur einen geringen Unterschied zur Entfernungsmessung zur Fahrbahn zeigt, so wird dann durch die korrelierende Messung der Helligkeitsunterschiede zwischen Fahrbahn und Hand die Zuverlässigkeit in der Erkennung deutlich besser.

Es ist vorteilhaft, wenn man die gesamte relevante Ebene mit einer Aufnahme oder Detektion erfassen kann. Dann können Stufen oder Sprünge in beliebiger Richtung relativ leicht deutlich detektiert werden. Derartige Sensoren sind jedoch z.T. aufwendig, langsam oder ungenau, sodass an sich Laserscanner bevorzugt werden, die mit einer Scanlinie die Umgebung abtasten.

Darüber hinaus ist es vorteilhaft die Ebene mit zwei Linien zu erfassen. Dabei kann man Laserscanner verwenden oder auch zur Erhöhung der Auswertegeschwindigkeit sich in einer gesamten Bildaufnahme nur auf die Auswertung bestimmter Linien oder Zeilen beschränken. Dabei sind die Scanebenen oder Linien so gegeneinander verdreht, dass sie sich schneiden oder kreuzen. Der eine Scan könnte quer arbeiten, während der andere längs ausgerichtet ist oder sie sind beide mehr oder weniger nach links oder rechts gekippt. Die Produktionslinien kreuzen sich dann mehr oder weniger auf der Fahrbahn. Objekte oder längliche Hindernisse, z.B. ein Balken oder eine Stufe, der oder die im ungünstigsten Fall quer auf der Fahrbahn liegen, könnten von nur einem quer arbeitenden Laserscanner nicht zuverlässig erfasst werden. Wenn ein weiterer Laserscanner längs ausgerichtet ist, würde er den Balken oder die Stufe als Sprung erfassen. Es können aber auch zwei Laserscanner so angeordnet sein, dass der eine etwas nach rechts und der andere etwas nach links gekippt ist. Auch dann können sie zusammen längliche, am Boden liegende Objekte, erkennen.

In der Praxis kommt es immer wieder zu Störungen bei der Aufnahme der Messergebnisse. Dies kann bedingt sein durch mehr oder weniger sporadische Fehler oder durch ein Rauschen in der Messvorrichtung oder aber auch durch Schwebeteile (Schnee, Regen, Staub), die die Auswertung irritieren.

Ungefiltert können diese Ergebnisse ein Hindernis vortäuschen, sodass dann falsche Reaktionen ausgelöst werden. Daher ist es von Vorteil störende Messwerte herauszufiltern. Das kann bspw. dadurch geschehen, dass Abweichungen von der Ebene nur dann als gültig erkannt werden, wenn sie sich durch mehrere zusammenhängende oder benachbarte Messwerte bestätigen. Diese Messwerte können sich in einer einzelnen Messaufnahme oder durch benachbarte oder zeitlich aufeinanderfolgende Messaufnahmen ergeben. Wenn nur ein einzelner Messwert nicht mehr im Toleranzbereich liegt, gilt dies nicht als Objekt-, Hindernis- oder Fehlererkennung. Erst, wenn eine bestimmte Anzahl, z.B. mehr als 5 benachbarte oder auch zeitlich bei einer nächsten Aufnahme bestätigte Messwerte, die dieser Stelle zugeordnet werden können, durch eine Überschreitung des Toleranzwertes diese Abweichungen bestätigen, kann dieses Objekt, Hindernis oder dieser Fehler statistisch oder aufgrund seiner Größe bestätigt werden. Eine einzelne Schneeflocke würde nur zwei oder drei Störungen an diesem Ort erzeugen, wohingegen ein relevantes Objekt oder Hindernis erst durch eine größere Anzahl an zusammenhängenden Messwerten bestätigt wird.

Auch andere Filterverfahren helfen Störungen zu eliminieren. Dabei kann die absolute Abweichung berücksichtigt werden. Dabei kann auch die Amplitude, also die Signalstärke des Messwertes, bewertet werden. Starke Signale sind höher zu bewerten als schwache Signale, die evtl. schon nah am Rauschen sind.

Vorteilhaft sind in dabei insbesondere entfernungsmessende Laserscanner, die in Fahrtrichtung vorn am Fahrzeug angebracht sind und mehr oder weniger schräg oder steil von oben aus geeigneter Höhe auf die Fahrbahn schauen. Wenn sie bspw. mind. den Anhaltweg vor dem Fahrzeug kontrollieren, kann bei Erkennung einer Gefahr das Fahrzeug rechtzeitig zum Stehen gebracht werden.

Statt Laserscanner bieten sich auch andere optische laufzeitmessende Verfahren, mit gewissen Einschränkungen auch Ultraschall und Radar, und je nach Beschaffenheit der Fahrbahn auch Kameras und Stereokameras mit entsprechender Bildverarbeitung an. Bei den Kamerasystemen ist in der Regel für ausreichenden Kontrast auf der Fahrbahn zu sorgen. Optische Verfahren haben bessere Auflösungen als Ultraschall und Radar, allerdings Probleme bei schlechten Sichtverhältnissen.

Der Vorteil gegenüber den üblichen horizontal über der Ebene ausgerichteten Laserscannern besteht bei den Sensoren, die aus geeigneter Position auf die Ebene blicken darin, dass die Ebene direkt kontrolliert wird. Sie muss in der zu erwartenden Entfernung vorhanden sein. Ein großer Vorteil ist, dass das Verfahren somit im Prinzip sicher ist. Während der üblicherweise horizontal ausgerichtete Laserscanner schwarze Objekte oder auch abgehende Stufen und Löcher nicht als Hindernis erkennen kann, werden diese Fehler oder Hindernisse durch das neue Verfahren in jedem Fall als Abweichungen von der idealen Fahrbahn erkannt.

Wenn ein reflektierendes Objekt auftaucht, wird dies durch eine kürzere Entfernung als die Messung zur Ebene angezeigt. Reflektierende Objekte werden von den bisherigen horizontal abstrahlenden Laserscannern zwar auch erkannt, nachteilig ist jedoch bei ihnen, dass sie Objekte mit zu geringer Remission, also schwarze Objekte, nicht erkennen. Bei einem optischen Sensor, z.B. bei einem Laserscanner, der die Ebene direkt kontrolliert, würde ein schwarzer Körper zwar auch nicht direkt gesehen werden, aber das Fehlen von Messwerten kann als Fehler und somit schließlich auch als Gefahr erkannt werden, sodass entsprechend ein Warn- oder Stoppsignal erzeugt werden kann.

Auch Fahrbahnabsenkungen, Stufen, Löcher und dergl. in der Fahrbahnebene werden jetzt als Hindernis erkannt. Die Absenkungen etc. können quasi behandelt werden wie negative Objekte.

Merkmale auf oder in der Ebene, insbesondere wenn sie erwartet werden, können auch als Wegmarken zur Navigation genutzt werden.

Neben der direkten Erkennung von Objekten ergibt sich ein weiterer Vorteil durch die Funktionsüberprüfung mittels der ortsspezifischen, zu erwartenden Referenzwerte für die Ebene. Wenn die Übereinstimmung positiv ist, ist somit ein Funktionstest bestanden.

Die Entfernungen zwischen dem Sensor und der Fahrbahnebene hängen natürlich von dem Montageort des Sensors und der Ausrichtung ab. Es bietet sich an den Sensor, z.B. einen Laserscanner, so auszurichten, dass er in Längsrichtung mind. den Anhalteweg vor dem Fahrzeug abdeckt bzw. dort auf die Ebene trifft und quer mind. die notwendige Fahrbahnbreite scannt.

An einem Fahrzeug könnte der Laserscanner bspw. aus einer Höhe von 2m auch 4m voraus den Fahrweg absichern. Somit sind je nach Bremswirkung und Fahrbahnzustand ggf. sogar Geschwindigkeiten von mehr als 15 km/h zulässig.

Wenn z.B. durch Erschütterungen am Fahrzeug, bspw. wenn das Fahrzeug auf rauer oder unebener Fahrbahn schnell fährt, eine weit vorausschauende Erfassung der Fahrbahnebene mit direkt entfernungsmessenden Verfahren, z.B. mit einem Laserscanner, nicht immer möglich ist, können mit Kamera bzw. Stereokamera evtl. Markierungen auf der Fahrbahn erkannt werden. Die Markierungen, z.B. Fahrbahnbegrenzungslinien, können dann ebenfalls zur Erfassung und Bewertung der Fahrbahnebene genutzt werden.

Ob sich auf der Ebene Objekte oder Hindernisse befinden oder ob es sich dabei lediglich um tolerierbare Rauigkeiten, tolerierbare Unebenheiten oder ein tolerierbares Maß an Fehlmessungen handelt, ist Definitionssache. Entsprechende Werte der Toleranz sollten in der Auswertung vorgesehen werden. So kann es bspw. bei Regen und Schnee im Außenbereich vorkommen, dass häufige Fehlmessungen auftreten. Damit das Fahrzeug nicht unnötig gestoppt wird, ist es sinnvoll, über einen Filter einzelne fehlerhafte Messungen auszuschließen oder zu tolerieren.

Von guter Qualität ist das Messergebnis, wenn alle Entfernungswerte vollständig vorhanden sind und innerhalb der zulässigen Toleranz liegen. Dann ist die Ebene auch als Fahrbahn nutzbar, d.h. es sind keine gefährlichen Objekte auf der Fahrbahn, es sind keine Löcher oder schwarzen Objekte vorhanden. Die Fahrbahn ist also vollständig und die Funktion ist geprüft.

Die Ebene vor dem Fahrzeug kann mit einer Kamera als Ganzes in einer Aufnahme erfasst werden. Sie kann mit anderen Sensoren, aber auch zeilenweise oder punktuell nach und nach erfasst werden.

So ist es von Vorteil, wenn die Ebene bspw. mit einem Laserscanner während der Fahrt zeilenweise zu erfassen. Dabei ist der Laserscanner so ausgerichtet, dass er quer über die Fahrbahnebene scannt. Je nach Scan und Fahrgeschwindigkeit wird somit die Fahrbahnebene zeilenweise erfasst, sodass die Bestimmung der Ebene nach und nach erfolgen kann.

Die Erfassung und Bewertung der Ebene kann sowohl an einer Linie als auch in der Fläche erfolgen. Insbesondere bei zeilenweiser Erfassung ist neben der translatorischen ggf. auch die rotatorische Bewegung des Fahrzeugs zu berücksichtigen. Dies ist von Bedeutung, um die Ebenheit der Fahrbahnebene auch in Fahrtrichtung zu prüfen. Im Gegensatz zur Kamera wird bei der zeilenweisen Erfassung die Ebene in der Längsrichtung in mehreren Schritten erfasst. Zwischen diesen Schritten bewegt sich das Fahrzeug. Die Bewegung des Fahrzeugs kann bei der Ebenenbestimmung berücksichtigt werden.

Weiterhin können zur Überprüfung des Verfahrens weitere bekannte Merkmale der Umgebung genutzt werden. Bspw. Bordsteine, Wände, andere Immobilien. Auch Vorrichtungen, die sich nicht bewegen, z.B. stationäre Maschinen, können im Stand oder auch während der Fahrt erfasst werden. Wenn das Messergebnis so ausfällt, wie es erwartet wird, ist dieses in der Regel die Bestätigung dafür, dass das Verfahren funktioniert. Insbesondere Kontrollen während der Fahrt führen zu neuen Messwerten. Die Messänderungen müssen dort erscheinen, wo sie erwartet werden. Damit wird sichergestellt, dass die alten Prüfergebnisse nicht eingefroren sind und der Rechner sich nicht aufgehängt hat.
Die Merkmale befinden sich in, auf, über oder in der Nähe der Fahrbahn. Sie können sowohl künstlich, also extra zur Überprüfung oder Führung des Fahrzeugs installiert sein, oder auch mehr oder weniger natürlichen Ursprungs sein, z.B. Immobilien, die ohnehin vorhanden sind.

Die Merkmale können unterschiedlichster Art sein. Mit Laserscannern werden bspw. Objekte erkannt, die erhaben sind, sich also in der Höhe von der Fahrbahnebene unterscheiden und sich durch eine andere Entfernung darstellen.

Mit Kameras werden hingegen optische Kontraste gut erkannt. So können Farbmarkierungen auf der Ebene, z.B. Markierungslinien, mit Triangulationsverfahren zur Ebenenbestimmung genutzt werden. Vorteilhaft ist ggf. auch die Kombination von Laserscannern oder anderen laufzeitmessenden Verfahren und Kameraverfahren.

Da es sich bei Laser, PMD und Kameraverfahren um optische Technologien handelt, ist es bspw. bei ungünstiger Witterung, wie Schnee, Regen oder auch starkem und blendendem Sonnenlicht günstig, Ultraschall oder Radarverfahren hinzuzunehmen.

Zur Überprüfung der Funktion bietet es sich an, Bewegungsänderungen des Fahrzeugs zu nutzen. Bspw. ist es beim Beschleunigen und Bremsen eines gefederten Fahrzeugs so, dass sich die Entfernung des Sensors zum Beobachtungsbereich auf der Ebene ändert. Beim Starten und Bremsen wird das Fahrzeug nicken und die Entfernung wird sich verringern. Beim Einnicken kann dann nicht nur die Funktion der Ebenenüberwachung geprüft werden, sondern möglicherweise auch die Wirkung des Bremsvorgangs. Der Grad des Einnickens ist ein Maß für die Bremsverzögerung.

Weiterhin erfolgt die Überprüfung des Verfahrens dadurch, dass der Sensor relativ zum Fahrzeug bewegt wird. Dabei kann eine rotatorische oder translatorische Bewegung oder eine Kombination hieraus erfolgen. Insbesondere bei einer rotatorischen Bewegung kann sich der Erfassungsbereich deutlich ändern, sodass dann ggf. auch andere Messwerte erwartet werden. Wenn die Bewegung des Sensors bekannt ist und eine Erwartung über die Umgebung vorliegt (Sollwert), dann kann wiederum mit den neuen Messwerten überprüft werden, ob das Verfahren funktioniert. Des Weiteren kann aber bspw. bei Bewegung des Sensors in eine neue Fahrtrichtung, z.B. beim Abbiegen, der Kurvenbereich erfasst werden. Durch translatorische Bewegung erhält der Sensor eine neue Perspektive und kann dadurch Objekte zuverlässiger bestimmen und ggf. besser dreidimensional erfassen. Die translatorische Bewegung kann ähnlich genutzt werden wie der Abstand (Basis) von zwei Kameras in der Stereotechnik.

Die Entfernung zur Ebene, auch zu Objekten, Hindernissen und dergl. kann bspw. mit einer Kamera auch dadurch bestimmt werden, dass Kontraste im Erfassungsbereich verfolgt werden, wenn sich das Fahrzeug definiert weiter bewegt. Nahe Kontraste und hohe Kontraste bewegen sich bei dem fahrenden Fahrzeug aus Sicht der Kamera von Aufnahme zu Aufnahme mehr als entfernte und niedrige Kontraste. Aus der ursprünglichen Position des Kontrastes in der ersten Aufnahme und im Vergleich dazu aus der Position in der zweiten Aufnahme lassen sich sowohl Entfernung zur Kamera, als auch Höhe des Kontrastes zur Ebene bestimmen.

Umgekehrt kann nach diesem Verfahren auch die Geschwindigkeit des Fahrzeugs bestimmt werden, wenn man davon ausgehen darf, dass die Kontraste sich wirklich in der Ebene befinden.

Grundsätzlich kann man statt Kontrasten auch mit Laserscannern oder anderen laufzeitmessenden Verfahren erhabene Objekte oder andere dreidimensionale Merkmale erfassen und in der Bewegung ähnlich verfolgen, wie Kontraste mit Kameras verfolgbar sind. Das Verfahren steigert die Erfassungsqualität. Bei den Kontrasten kann es sich z.B. auch um Fahrbahnmarkierungen, aber auch um Schatten auf der Ebene handeln.

Zur Messung der Entfernung der Ebene eignen sich auch Stereokameras, aber auch Verfahren, mit denen z.B. Punkte, Linien oder optische Muster auf die Fahrbahn projiziert werden. Die Entfernungsbestimmung erfolgt dann mit Empfängern und Auswertern, die das Triangulationsverfahren nutzen. Auch die Größe, z.B. Breite, einer bekannten Markierung kann zu deren Entfernungsbestimmung genutzt werden (Strahlensatz).

Während sich Stereoverfahren auch bei hellem Tageslicht im Außenbereich und bei großen Entfernungen eignen, ist die optische Projektion (auch Lichtschnittverfahren) eher im Nah- oder auch Innenbereich von Vorteil. Hier stört dann das helle Sonnenlicht nicht die Projektionsmuster.

Bei den Lichtschnittverfahren oder allgemein Projektionsverfahren werden Linien, Punkte oder andere Muster im optischen oder auch benachbarten Frequenzbereich auf die zu überwachende Ebene projiziert, bspw. mit einem Linienlaser. Mit einem dazu passenden Empfänger, z.B. mit einer Kamera, die mit einem bekannten Abstand zum Laser angeordnet ist, also die Ebene aus einer anderen Richtung betrachtet, wird das Muster auf der Ebene kontrolliert. Bei Störungen auf der Ebene, z.B. Objekten, wird das Muster, je nach Größe des Objektes, in einer abweichenden Richtung gesehen.

Mit einem Linienschnittsensor, der das Muster, z.B. eine Linie, nur quer zur Fahrbahnrichtung auf die Ebene projiziert, werden beim Nicken des Fahrzeugs oder bei an sich zulässiger Änderung der Steigung der Fahrbahn, möglicherweise irrtümliche Hindernisse oder Störungen angezeigt. Daher ist es von Vorteil, den Linienschnittsensor in Kombination mit anderen Sensoren, auch anderen Linienschnittsensoren, die einen anderen Teil der Ebene beobachten, einzusetzen. Aber auch mit der Projektion von flächigen Mustern, z.B. flächig verteilten Punkten, parallelen Linien, Gittern o.ä., kann die Ebene in einem größeren Bereich kontrolliert werden. Objekte, Hindernisse und dergl. können dann unterschieden werden von dem Nicken des Fahrzeugs oder sich ändernder Steigung der Fahrbahn. Man kann diese Objekte etc. dann sozusagen diskret erkennen und sie von der an sich sonst akzeptablen Ebene unterscheiden.

Mit der flächigen Kontrolle der Ebene können auch kleine Unterschiede in der Fahrbahn, z.B. Türschwellen oder unterschiedliche Belege, in der Höhe erkannt werden. Linienschnittsensoren und andere bildgebende Verfahren haben gegenüber den üblichen laufzeitmessenden Verfahren eine im Allgemeinen bessere Auflösung. Mit der entsprechenden Informationsauswertung (3-D, auch Bildauswertung) kann man dann sogar auf der Ebene die Hand eines Kleinkindes (Hindernis) von Belagsübergängen, z.B. von Parkett auf Teppich (kein Hindernis) unterscheiden. Zusätzlich helfen Helligkeits- und auch Farbunterschiede auf der Ebene oder zwischen Ebene und Objekten usw. und unterstützen die Auswertung vorteilhaft, wenn die Entfernung zur Bewertung der Ebene (3-D) alleine nicht ausreichend ist und umgekehrt.

Bei dem Linienschnittverfahren ist das Muster relativ klein im Vergleich zur beobachtenden Fläche. Die abgestrahlte Energie wird effizient auf das Muster konzentriert, wodurch das Muster umso deutlicher im Kontrast wahrgenommen wird. Hilfreich ist es dann eine Aufnahme mit Muster in Differenz zu einer Aufnahme ohne Muster zu bringen. Im Differenzbild wird das Muster noch deutlicher herausgestellt, unabhängig von der Ortsbeleuchtung.

Es bietet sich aber auch an, mit Blitzlicht zu arbeiten, z.B. um Kanten auf der Ebene zu erkennen. Je nach Ausrichtung zum Blitzgerät werden die Flächen unterschiedlich aufgehellt und können somit von dem Sensor (Kamera) erkannt werden. Dabei ist es auch hier von Vorteil, die Unterschiede durch eine Aufnahme mit Blitz zu einer Aufnahme ohne Blitz zu vergleichen.

Die Verwendung von Infrarotmustern oder Blitzen stört Menschen nicht; die Verwendung von sichtbaren Mustern oder Blitzlicht kann wiederum auch als Hinweis auf ein sich näherndes Fahrzeug genutzt werden. Dabei gleicht die Verwendung der Kombination unterschiedlicher Verfahren Schwächen einzelner Verfahren aus.

Kontraste können sich in der Helligkeit, also mehr oder weniger schwarz- weiß oder in ihrer Farbe, auch in dem für Menschen nicht sichtbaren Spektrum darstellen. Außer für die Erfassung der Kontraste können Helligkeit und auch Farbe zur Überprüfung der Ebene genutzt werden. Wenn Helligkeit oder Farbe nicht stimmen, kann ein Fehler, eine Markierung, eine Gefahr oder ein anderer Ebenenbereich vorliegen. Unabhängig vom Tageslicht können Helligkeit und ggf. auch Farbe besser mit künstlicher Beleuchtung, auch Blitzlicht, bewertet werden.

Vorteilhaft ist weiterhin, dass Fahrbahnmarkierungen, die zur Spurführung genutzt werden, über die Entfernungsprüfung von erhabenen Kontrasten, z.B. Objekten und Hindernissen, unterschieden werden können. Diese Prüfung steigert auch die Aussagekraft der Markierungsdetektion.

Außerdem ist es von Vorteil, wenn mind. zwei Sensoren verwendet werden, die unterschiedlich steil auf die Ebene blicken. So kann es bspw. sein, dass sich auf einer nassen Fahrbahn die Sonne oder andere Strahler in der Ebene spiegeln und die Erfassung der Ebene für einen Sensor dadurch erschwert oder unmöglich wird. Dann ist es von Vorteil, dass die Sensoren mit unterschiedlichen Winkeln auf die Fahrbahn schauen. Möglicherweise haben sie dann auch unterschiedliche Standorte. Somit kann sich die Qualität der Messung mind. für einen der Sensoren verbessern.

Nach einer weiteren Ausgestaltung werden mehrere Sensoren für unterschiedliche Bereiche verwendet. Ein weitreichender Sensor kann bspw. als Warnsensor eine Langsamfahrt einleiten. Ein anderer Sensor mit kurzer Reichweite ist ggf. für Stopp oder Notaus zuständig. Für eine sehr kurze Reichweite haben sich sog. berührende oder taktile Sensoren, z.B. Bumper oder Schaltleisten, bewährt.

Die Ebenenüberwachung bietet sich sowohl für vollautomatische Fahrzeuge als auch für Assistenzsysteme an. Je nach Umgebungsbedingungen kann es sein, dass z.B. Regen, Schnee, ungünstig stehende Sonne usw., von der Ebenenüberwachung fälschlicherweise Hindernisse erkannt werden. Wenn dann bspw. ein automatisch fahrendes Fahrzeug zum Stehen kommt, obwohl kein Hindernis vorhanden ist, kann dies durch Kamerabildübertragung per Funk und Darstellung der Fahrzeugumgebung auf einem Monitor erkannt werden. Eine berechtigte Person kann dann teleoperiert die Weiterfahrt freigeben.

Die Überprüfung des Verfahrens, insbesondere des Sensorsystems, kann auch dadurch vorgenommen werden, dass bei licht- oder anderen energieaussendenden Sensoren diese Energiequelle zum Selbsttest abgeschaltet wird. Die Messung zur Ebene und zur Bestimmung der Ebene muss dann berechtigterweise einen Fehler oder eine andere Reaktion darauf zeigen.

Wenn eine Gefahr erkannt wird, soll in der Regel ein Stopp oder eine Langsamfahrt erfolgen. Wichtig ist jedoch, dass die Einleitung der Langsamfahrt auch überprüft wird. Die Verzögerung kann zwar auch durch Messen der Geschwindigkeit, z.B. über Inkrementalgeber, festgestellt werden.

Vorteilhaft ist es jedoch, die Beschleunigungsänderung direkt mit einem Beschleunigungssensor zu messen. Der Beschleunigungssensor muss zur Sicherstellung der Verzögerung einen entsprechenden Mindestwert liefern. So ist es dann bspw. möglich, dass bei Erkennung eines Hindernisses in großer Entfernung vor dem Fahrzeug, zunächst eine moderate Bremsverzögerung eingeleitet wird bis eine geringere, akzeptablere Geschwindigkeit oder auch der Stillstand des Fahrzeugs erfolgt. Falls der Beschleunigungssensor keine ausreichende Bremswirkung feststellt, kann das Fahrzeug ggf. immer noch über Notaus zuverlässig gestoppt werden.

Geschwindigkeitssensoren, auch Wegsensoren, z.B. Inkrementalgeber, können auch zur Überprüfung des Beschleunigungssensors genutzt werden oder vice versa.

Darüber hinaus können Veränderungen in der Ebene, z.B. andere Neigungen oder auch Stufen, also Sprünge, oder andere Veränderungen festgestellt werden. Diese Änderungen können tolerierbar sein oder sogar erwartet werden, wenn der Streckenverlauf bekannt und gespeichert ist. Änderungen können bspw. zur Hinderniserkennung oder Navigation genutzt werden.

Die Ebene lässt sich nicht nur dadurch bestimmen, dass die Entfernungsmessungen innerhalb des Toleranzbandes für die zu erwartenden Entfernungen liegen. Sie kann auch dadurch bestimmt werden, dass benachbarte Messwerte miteinander verglichen werden. Bei einer rauen Fahrbahn schwanken die einzelnen Messwerte im Vergleich zu einer glatten Fahrbahn natürlich deutlicher. Wenn die Werte jedoch stärker schwanken, als erwartet wird, kann dieses auch an der Messungenauigkeit liegen und somit ein Maß für die Messqualität sein. Bei großen Schwankungen zwischen den einzelnen benachbarten Messwerten kann dann ggf. das Vertrauen in die Messung zurückgesetzt werden. Evtl. sind dann andere Messverfahren erforderlich oder Korrekturen vorzunehmen. Bei guter Qualität der Messwerte steigt dagegen das Vertrauen.

Wenn eine raue Fahrbahn oder ein rauer Bereich festgestellt werden, aber ein glatter Bereich erwartet wird, kann auch hier eine Abweichung festgestellt werden. Wenn sogar ein glatter Bereich gegenüber einem rauen Bereich festgestellt werden kann, können auch diese Bereiche unterschieden werden. Dies kann sowohl der Hinderniserkennung, als auch der Navigation dienen. Wiederum kann dies in Kombination mit Entfernungsänderungen oder auch Änderungen der Oberflächenfarbe und auch Oberflächenhelligkeit zur Kontrastbildung bzw. Objekt, Hindernis- oder Fehlererkennung dienen.

Auch bei laufzeitmessenden oder peilenden Verfahren (Laser, Radar, Ultraschall) kommt es je nach Reflektion immer wieder zu mehrdeutigen Messergebnissen. Bei Lasern sind es häufig schwebende Teile (Regen, Schnee, Staub, Nebel), die kein eindeutiges Messergebnis liefern. Bei Radar und Ultraschall sind es auch Reflektionen an Objekten in der Nachbarschaft, die zu Mehrdeutigkeiten führen.

Dabei ist es von Vorteil, wenn geprüft wird, ob die Referenzwerte (Sollwerte) mit der erwarteten Ebene in den gemessenen Werten (Istwerten) vorhanden sind und identifiziert werden können. Auch hier sind evtl. Toleranzen zu den gemessenen Werten zu akzeptieren. Die anderen abweichenden, nicht plausiblen Werte können dann ggf. vernachlässigt werden. Diese Vorgehensweise erleichtert bspw. das Wiederfinden von Wegmarken und anderen bekannten Reflektoren oder Kontrasten erheblich. So ist es bspw. bei Schneefall möglich aus den vielen Messergebnissen bei Anwendung eines Laserscanners die Störungen durch Schneeflocken herauszufiltern und die Fahrbahnebene zu detektieren, wenn hin und wieder Messwerte gefunden werden, die mit der erwarteten Entfernung zur Fahrbahnebene übereinstimmen (Plausibilität). Wenn kein Messergebnis mit den erwarteten Entfernungsmessungen übereinstimmt, kann evtl. ein Hindernis vorhanden sein.
Die Ebene ist dann ausreichend in ihrer Qualität erfasst oder als ausreichend zuverlässig oder sicher erkannt, wenn genügend erfolgreiche Übereinstimmungen innerhalb der Toleranz zwischen den gemessenen Werten (Istwerten) und den Referenzwerten (Sollwerten) vorliegen.

Wenn zwischen Referenzwerten der erwarteten Ebene (auch Erwartungsbild) und den gemessenen Werten, auch aktuelles Bild, mehrere Differenzen typischerweise mit gleicher Tendenz, auftauchen, dann ist es ggf. sinnvoll durch rotatorische oder translatorische Verschiebung oder ähnliche Anpassung eine bessere Übereinstimmung zu schaffen. Möglicherweise hat sich das Fahrzeug anders bewegt als geplant. Die beste Übereinstimmung kann zur Fehlerfeststellung und Bestimmung, Korrektur, aber auch als neue Referenz für die nächste Ebenenerfassung dienen.

Je nach Anwendung ist es von Vorteil, dass Verfahren über mehrere Messungen fortzusetzen, sodass einzelne Messfehler, z.B. in einzelnen Aufnahmen oder bei einzelnen Scans, ausgeglichen werden können. Somit lassen sich dann auch tatsächliche Objekte oder Hindernisse besser bestimmen, wenn sie durch fortlaufende Messerfassungen bestätigt werden. Bei optischen und auch bei laufzeitmessenden Verfahren bietet es sich an Filter zu verwenden, um einzelne Messfehler zu unterdrücken. Wenn dagegen mehrere benachbarte Messwerte die gleiche Abweichung zeigen, kann eine Abweichung von der Ebene als zuverlässig erkannt akzeptiert werden. Hiermit können je nach Auslegung ggf. nicht nur einzelne Messfehler, sondern auch Störungen durch Schwebeteile, z.B. Schnee, Regen, herausgefiltert werden. Es ist dann festzulegen, wie viele benachbarte Messwerte erforderlich sind, um eine Abweichung von der Ebene zu akzeptieren.

Die Entfernungsbestimmung zur Ebene und zu Objekten ist mit einigen Verfahren, so auch der Stereotechnik, kompliziert, z.T. mehrdeutig und somit oft fehlerhaft. Das Prinzip der Stereotechnik beruht darauf, dass mind. zwei Aufnahmen von unterschiedlichen Standorten gemacht werden. Zur Bestimmung der Entfernung müssen dann in den Aufnahmen die gleichen Kontraste gefunden und miteinander verglichen werden. Die gleichen Kontraste haben in den Aufnahmen unterschiedliche Positionen. Die Differenz (Disparität) ist umso stärker, je geringer die Entfernung ist. Die Differenz wird zur Entfernungsbestimmung genutzt. Aufwendig ist es jedoch, die identischen Kontraste in den Aufnahmen zu finden und richtig zuzuordnen.

Von außerordentlichem Vorteil ist es nach einer weiteren Ausgestaltung, wenn dann für die zu erfassende Ebene bereits Referenzwerte (Entfernungswerte) vorliegen. Je nach Position auf der Referenzebene (Sollebene) sind dann die entfernungsabhängigen Disparitäten ableitbar und bekannt. Der Vergleich der Stereoaufnahmen wird dadurch sehr viel einfacher, weil nur noch geprüft werden muss, ob mit Berücksichtigung der entfernungsabhängigen Disparität die Aufnahmen ggf. innerhalb einer akzeptablen Toleranz identisch sind. Sollte der Vergleich der Aufnahmen deutliche Unterschiede zeigen, sind somit Objekte, Hindernisse oder andere Abweichungen oder auch bekannte Merkmale oder Wegmarken erkannt. Das Verfahren spart viel Rechenzeit und zeigt weniger Fehler als bisherige Verfahren.

Weiterhin kann man ähnlich wie bei den Stereoverfahren vorgehen, wenn Aufnahmen von verschiedenen Standorten erstellt werden. Vorteilhaft können bspw. Aufnahmen mit Kameras von einem Fahrzeug aus zur Fahrbahnebene genutzt werden. Mit einer ersten Aufnahme werden Kontraste und ähnliche Merkmale erfasst. Diese Aufnahme dient als Referenz. Wenn das Fahrzeug dann etwas weiter fährt und eine weitere Aufnahme gemacht wird, müssen die Kontraste, die auf der Ebene sind, auch in der zweiten Aufnahme dort erscheinen, wo sie aufgrund der Fahrzeugbewegung erwartet werden, also entsprechend näher an das Fahrzeug herangerückt sein.

Ähnlich wie bei der Stereotechnik zum Vergleich von zwei Aufnahmen je nach Entfernung des zu untersuchenden Bereiches auf der Fahrbahnebene eine größere Disparität für den nahen Bereich und kontinuierlich abnehmend kleinere Disparitäten für den entfernteren Bereich genutzt werden können, kann für Aufnahmen, die während der Fahrt nacheinander erstellt werden, für den nahen Bereich eine größere Verschiebung und für den weiter entfernteren Bereich entsprechend kleinere Verschiebungen oder Disparitäten in den Aufnahmen zugrunde gelegt werden. Diese Disparitäten sind für Kontraste auf der Ebene aus den geometrischen Verhältnissen vorherbestimmt.

Wenn nun der Kontrast aber eine größere oder kleinere Verschiebung oder Disparität aufweist als für ein Merkmal auf der Ebene zu erwarten wäre, dann muss dieses Merkmal sich über oder unter der Ebene befinden. Es muss sich dann also um ein Merkmal handeln, das zu einem Objekt gehört.

Der Vorteil des Verfahrens liegt nun darin, dass man schon aus der ersten Aufnahme bestimmen kann, wo die Kontraste in der zweiten Aufnahme zu suchen sind. Es lässt sich also bereits für die zweite Aufnahme ein Erwartungsbild (Referenz) erstellen.
Es ist dann im nächsten Schritt relativ einfach, die zweite Aufnahme mit dem Erwartungsbild zu vergleichen, ggf. auch eine Differenz zu bilden. Wenn das Erwartungsbild und die zweite Aufnahme identisch sind, also keine Differenz auftritt, dann liegt eine ungestörte, also erwartete, Ebene vor. Es befindet sich dann in der Regel kein Objekt oder Hindernis auf der Fahrbahn. Komplizierte Berechnungen, wie sie sonst bei bildgebenden Systemen erforderlich sein können, entfallen.

Wenn Abweichungen zwischen Erwartungsbild (Referenz) und der zweiten Aufnahme vorliegen, kann es aber auch zu einer nicht erwarteten Lageveränderung des fahrenden Fahrzeugs gekommen sein. Dies kann eine nicht erwartete rotatorische und eine translatorische Veränderung betreffen. Wenn die Abweichungen in größeren Bereichen der Aufnahme festgestellt werden oder sich in weiteren Aufnahmen tendenziell fortsetzen, können die Abweichungen zur Korrektur der Lage, der Lagebestimmung oder auch zur Aufdeckung von Fehlern der Weg- und Richtungsmesseinrichtung (Odometrie) oder anderer Sensoren verwendet werden.

Laufzeitmessende Verfahren, z.B. Laserscanner, messen die Entfernung direkt und zuverlässig. Sie benötigen aber relativ viel Zeit pro Messung und arbeiten in der Regel zweidimensional. Kameraverfahren, z.B. Stereo, erfassen mit jeder Aufnahme die gesamte oder einen großen Teil der relevanten Teil Ebene und können prinzipiell sehr viele Daten liefern. Allerdings benötigen sie Kontraste und die Auswertung ist oft weniger zuverlässig.

Vorteilhaft ist die Verwendung von beiden Verfahren. Mit dem Laser kann die Ebene zuverlässig in ihrer Lage bestimmt werden. Darauf aufbauend können z.B. mit einer Stereokamera Kontraste detaillierter dargestellt und vermessen werden. Wenn die Lage der Ebene schon bekannt ist, entfallen für die Auswertung der Stereobilder viele Mehrdeutigkeiten. Die Auswertung wird schneller, einfacher und zuverlässiger. Insbesondere, wenn mit der Bewegung eines Fahrzeugs weitere Aufnahmen gemacht und verglichen werden, ergibt die Auswertung eine hohe Zuverlässigkeit und Qualität. Ohnehin ist es bei noch höheren Ansprüchen vorteilhaft, mit mehreren Sensoren die Ebene aus verschiedenen Positionen zu betrachten. Dadurch lassen sich auch dreidimensionale Objekte quasi hinterleuchten bzw. die umgebende Szene besser darstellen. Dies hilft auch die Messqualität zu erhöhen oder auch Blendungen durch Strahler, z.B. die Sonne, oder andere Störungen zu umgehen.

Als Referenz für die weitere Ebenenerfassung und Bewertung lässt sich eine Ebenenerfassung durchführen. Dieser Vorgang kann in einem sog. Teach-in Verfahren auch direkt vor Ort durchgeführt werden. Dabei können Lage der Ebene, Rauigkeit, Unebenheit, Helligkeit, Farbe und dergl. aufgenommen werden. Es lassen sich auch die Toleranzwerte dazu ggf. automatisch oder auch manuell eingeben. An dieser Referenzebene sollen dann weitere erfasste Ebenen gemessen bzw. verglichen werden.

Je nach Ort können eine oder verschiedene Referenzebenen zur Führung eines Fahrzeugs genutzt werden, also zur Führung in der Spur und auch zur Regelung der Geschwindigkeit. Wenn Abweichungen festgestellt werden, kann hiermit ein Stopp, eine andere Geschwindigkeit oder auch, wenn man die Situation auf der Ebene entsprechend bewerten kann, eine Ausweichstrategie, z.B. Umfahrung von Hindernissen, veranlasst werden. Kontraste oder andere Merkmale, z.B. Landmarken, können gesucht und genutzt werden, um damit das Fahrzeug zu führen. In der Regel müssen die Landmarken dann erwartet werden können. Sie sind Bestandteil einer Bahnkarte. Es kann sich z.B. um Markierungen in oder auf der Ebene, aber auch erhabene Merkmale handeln. Auch kann es sich um Auffälligkeiten oder Änderungen in der Lage der Ebene, der Rauigkeit, der Unebenheit, der Helligkeit der Farbe und dergl. handeln.

Das Verfahren ist zur Messerfassungen, Kontrolle, Assistenz und für den automatischen Betrieb geeignet.

Ausführungsbeispiele sind im Folgenden dargestellt und beispielhaft beschrieben.
Es zeigen:
- Fig. 1: Erfassung der Ebene vor einem Fahrzeug
- Fig. 2: Messergebnisse
- Fig. 3: Auswertungsergebnisse
- Fig. 4: Erfassung der Ebene vor einem fahrenden Fahrzeug
- Fig. 5: eine Draufsicht auf das in den Figuren 1 und 4 gezeigte Fahrzeug
- Fig. 6: eine weitere Draufsicht auf das Fahrzeug

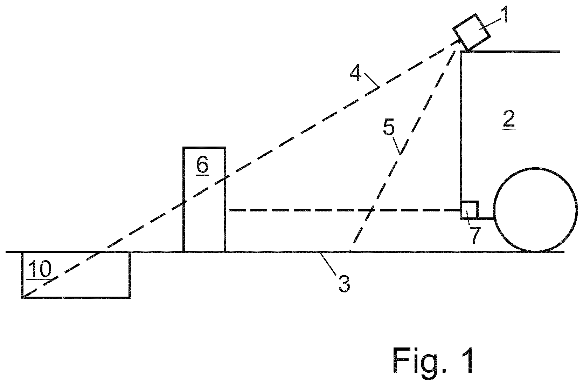

In Fig. 1 wird von einem Sensor (1), z.B. einem Laserscanner, der sich an einem Fahrzeug (2) befindet, die Fahrbahnebene (3) betrachtet. Der Sensor (1) kann quer über die Fahrbahnebene (3) einen Scanstrahl (4) absetzen. Es ist zweckmäßig, dass mind. die Fahrbahnbreite bzw. die Breite des Fahrzeugs (2) erfasst wird und dass der Sensor (1) ausreichend weit vorausschaut, sodass das Fahrzeug bei Erkennung eines Objektes (6), in diesem Fall eines Hindernisses, rechtzeitig gestoppt werden kann.

Wenn ein erhabenes Objekt (6) über der Fahrbahnebene (3) erkannt ist, dann ist die Entfernung vom Sensor (1) zum Objekt (6) kürzer als die Entfernung zur Fahrbahnebene (3) wäre.
Besonders gut ist die Fahrbahn im Nahbereich zu erkennen, daher ist das Verfahren besser für den Nahbereich als für den fernen Bereich geeignet.

Üblicherweise werden bekannte horizontale Laserscanner (7) so eingesetzt, dass sie quasi scheibenförmig parallel zur Ebene, aber auch in einem geringen Abstand zur Ebene, die Umgebung erfassen. Es zeigt sich dabei, dass sie zwar helle Objekte (6) gut erkennen können. Es wird aber auch deutlich, dass sie Objekte (6), wenn sie schwarz sind, nicht erkennen und dass sie des Weiteren auch keine Absenkungen oder Löcher (10) in der Fahrbahn erkennen. Das ist ein grundsätzliches Sicherheitsproblem der bekannten horizontalen Laserscanner (7). Nachteilig ist auch, dass sie höher stehende Hindernisse, z.B. überstehende Ladung, Deichseln von Anhängern und dergl. nicht sehen.

Typisch ist auch, dass sie vielleicht rechts und links der Fahrbahn die Beine von einem Tisch oder auch die Räder von einem Fahrzeug erkennen, nicht aber die Tischplatte bzw. den Fahrzeugaufbau sehen. Da ist es dann natürlich vorteilhaft, wenn der Sensor (1) eine deutlich höhere Position hat und auch den oberen Bereich des Fahrzeugs (2) schützt. Es kann aber auch von Vorteil sein, bekannte horizontale Laserscanner (7) mit dem von oben herabschauenden Sensor (1) zu kombinieren.

Wenn es sich bei dem Sensor (1) um einen Laserscanner handelt, kann man die Fahrbahnebene (3) auch im Stand des Fahrzeugs (2) erfassen. Voraussetzung dafür ist, dass der Sensor (1) dann um seine Querachse gekippt oder gedreht werden kann, also dass der Laserscanner den Bereich zwischen Scanstrahl (4) und unterem Scanstrahl (5) erfassen kann. Das kann z.B. automatisch erfolgen. Die Fahrbahnebene (3) kann in diesem Bereich aber auch alternativ durch sog. PMD- Kameras, Stereokameras oder durch andere Technologien quasi in einem Bild erfasst werden. So können auch Objekte bzw. Hindernisse erfasst werden, die sich unterhalb des Scanstrahls (4) befinden.

Wenn es sich bei dem Sensor (1) um einen Laserscanner handelt, der nur nach Scanstrahl (4) ausgerichtet ist, dann lässt sich die Fahrbahnebene (3) auch erfassen, wenn das Fahrzeug (2) fährt. Während der Fahrt wird dann nach und nach die Fahrbahnebene (3) in Schritten mit den einzelnen Scans aufgenommen.
Geeignet sind auch mehrstrahlige Laserscanner, die mehrere Zeilen quasi gleichzeitig aufnehmen können.

Bei dem Scannumgang des horizontal ausgerichteten Laserscanners (7) wird kreisförmig eine Ebene, z.B. 10cm über dem Boden, abgescannt. Dabei trifft der Laserscannerstrahl auch das Objekt (6). Wenn das Objekt jedoch ganz schwarz ist, kommt keine Reflexion zurück und das Objekt wird nicht gesehen.

Vorteilhaft mit der Erfindung ist dann der schräg nach vorne schauende Sensor (1), z.B. ein Laserscanner, der die ganze Fahrbahn oder Fahrbahnebene (3) beobachtet. Normalerweise trifft der Scanstrahl (4) dann in einer zu erwartenden Entfernung die Fahrbahnebene (3).

In dargestellten Beispiel ist der Scanner an einem Lkw befestigt, z.B. 3m über der Fahrbahn und derart ausgerichtet, dass er die Fahrbahn etwa 4m vor dem Lkw treffen müsste. Nach der Trigonometrie ergibt sich, dass der Strahl die Fahrbahnebene (3) in 5m Entfernung trifft. Wenn dort ein Objekt (6) steht, wird es ggf. direkt gesehen. Die Entfernung ist dann nicht 5m, sondern nur 3m, was als Fehler oder Hindernis erkannt wird. Das Fahrzeug wird gebremst. Wenn das Objekt schwarz ist, wird es jedoch nicht direkt gesehen. Da aber keine Rückmeldung erfolgt, wird dies als Abweichung von der Ebene erkannt und das Fahrzeug wird ebenfalls gebremst.

Das ist der erste Vorteil der Patentanmeldung, dass man in einer bekannten Entfernung die Fahrbahnebene (3) erwartet, z.B. 5m. Wenn eine Reflexion nicht in dieser Entfernung erfolgt, liegt in jedem Fall eine Gefahr oder Unsicherheit vor. Somit werden also auch schwarze Objekte erkannt. Darin besteht ein wesentlicher Vorteil gegenüber den bekannten Verfahren, bei denen ausschließlich ein horizontaler Laserscanner (7) eingesetzt wird, welcher nicht zuverlässig auf schwarze Objekte reagiert.

In Fahrsituationen, wenn das Fahrzeug wankt oder die Fahrbahn ansteigt oder abfällt, kommt es zu Abweichungen der Messwerte von einem Sollwert. Beispielsweise kann es sein, dass die Messentfernung statt 5m nur noch 4,8m oder 5,2m zeigt, obwohl kein Hindernis oder Objekt vorhanden ist. Daher ist es von Vorteil, wenn zusätzlich die "Ebenheit" ermittelt wird, also der Verlauf der Messwerte quer zur Fahrtrichtung.

Hierbei mach sich die Erfindung zu nutze, dass der Laserscanner durch störende Einflüsse, z.B. Temperatur und Licht zwar erheblichen absoluten Fehlereinflüssen unterworfen ist, jedoch bei direkt nacheinander erfolgenden Messungen nur kleine, relative Fehler auftreten. Weil bei zeitlich aufeinanderfolgenden Messungen nur kleine relative Fehler auftreten, können dann auch relativ kleine Objekte deutlich erkannt werden, insbesondere, wenn sie sich quasi scharfkantig, also eine Unstetigkeitsstelle abbilden.

Zum besseren Verständnis wird dieser Zusammenhang nachfolgend noch an einem Beispiel erläutert. Wenn die absolute Genauigkeit des Scanverfahrens bei 5cm liegt, kann auch trotzdem ein Objekt mit einer Höhe von 1cm erkannt werden, weil die Wiederholgenauigkeit geringer ist als 1cm bzw. auch ein Sprung erkannt wird, dadurch dass z.B. 10 Messungen vor dem Objekt statistisch einen anderen Mittelwert bilden als 10 Messungen auf dem Objekt. Nach dem Objekt sollten die 10 Messungen statistisch wieder den Werten vor den Messungen entsprechen.

Grundsätzlich können auch Beulen oder Dellen erkannt werden, also Objekte, die einen flacheren Anstieg haben. Der statistische Aussagewert steigt dabei mit der Breite des Objektes.

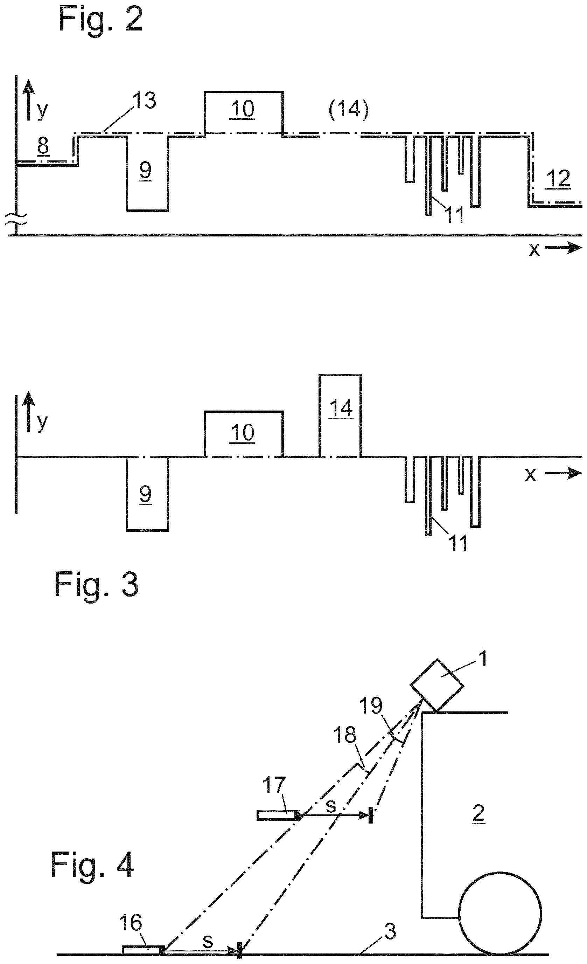

In Fig. 2 ist die Entfernung (y) über der Fahrbahnbreite (x) dargestellt, bspw. wenn ein Laserscanner die Fahrbahnebene (3) quer abscannt. Man erkennt links einen Bordstein (8), ein Hindernis (9), ein Loch (10), ein schwarzes Objekt (14), Schwebeteile (11), sowie eine Immobilie (12). Bei dem Loch (10) ist die Entfernung weiter als bei der Fahrbahnebene (3). Bei einem schwarzen Objekt (14) wird typischerweise kein Signal detektiert wird.

Bei den Schwebeteilen (11) kann es sich um Regen, Schnee oder Laub oder ähnliches handeln. Das Reflektionsbild stellt sich in der Regel beim nächsten Scan wieder anders dar, sodass die Schwebeteile (11) klassischerweise von einzelnen feststehenden, also von dauerhaften Einrichtungen, unterschieden werden können. Auch das Reflektionsbild von Nebel unterscheidet sich von Schwebeteilen (11) und kann ggf. ausgewertet werden. Das Reflexionsbild von Nebel ist auch diffuser und unterscheidet sich somit von Schwebeteilen. Wichtig ist die Unterscheidung dieser unterschiedlichen Reflektionen u.a. in der Bewertung der Gefahrensituation vor einem Fahrzeug (2). Bei Schwebeteilen (11) oder Nebel muss normalerweise nicht gebremst werden; bei echten Hindernissen (9) schon.

Bei der Immobilie (12) handelt es sich um eine dauerhafte Einrichtung. Sie kann zur Spurführung eines Fahrzeugs (2), z.B. entlang von Leitplanke oder Wand, oder auch zur Ortsbestimmung in Fahrtrichtung, z.B. an Gebäudeecken, Türen, Säulen und dergl. genutzt werden. Sogar Löcher (10) in der Fahrbahnebene können als Ortsreferenz verwendet werden.

Die Referenzlinie (13) stellt die Entfernungswerte dar, die an diesem Ort auf der Fahrbahnebene (3) erwartet werden. Wenn Referenzwerte und gemessene Werte übereinstimmen, ist die Fahrbahn so wie erwartet. Mit Abweichungen kann ein Objekt (6) detektiert werden oder ein Hindernis (9) oder eine Störung erkannt werden.

Die Fig. 2 ist idealisiert dargestellt. Die Referenzlinie (13) oder entsprechend die Fahrbahnebene (3) sind aus Sicht des Sensors (1) rechts und links tatsächlich weiter entfernt, als in der Mitte. Diese Verzerrung ist zur besseren Darstellung hier korrigiert worden, sodass die Referenzlinie (13) im Fahrbahnbereich als Gerade erscheint.

Fig. 3 bezieht sich auf Fig. 2 und zeigt über die Fahrbahnbreite die Differenz zwischen den gemessenen Werten und den Referenzwerten. Wenn die gemessenen Werte den erwarteten Referenzwerten entsprechen, ist keine Differenz zu erkennen.
Zu sehen sind aber die Abweichungen durch das Hindernis (9), das Loch (10), das schwarze Objekt (14) und die Schwebeteile (11).

Fig. 4 zeigt einen Sensor (1), z.B. eine Kamera, an einem fahrenden Fahrzeug (2) über der Fahrbahnebene (3). Es soll dargestellt werden, dass Kontraste in verschiedenen Höhen durch die Verfolgung der Kontraste erkannt werden können. Der Markierungskontrast (16) auf der Fahrbahnebene (3) wird von dem Sensor (1) in der gleichen Richtung gesehen, wie der Objektkontrast (17).

Wenn das fahrende Fahrzeug (2) nach einer bestimmten Zeit etwas weiter gefahren ist, dann haben sich die Kontraste aus Sicht der Kamera (1) scheinbar um die Strecke (S) weiter auf das Fahrzeug zu bewegt. Jetzt erscheint der Markierungskontrast (16) jedoch um einen kleineren Winkel (18) versetzt und der Objektkontrast (17) um einen größeren Winkel (19) verschoben. Die Höhe der Objektmarkierung (17) über der Fahrbahnebene (3) und die Entfernung zum Sensor (1) bzw. zum Fahrzeug (2) lassen sich berechnen, wenn die Höhe des Sensors (1) über der Fahrbahnebene (3), die Strecke (S) und der größere Winkel (19) bekannt sind.

Wenn von einem ersten Standort aus eine erste Aufnahme von der Fahrbahnebene (3) gemacht wird, dann kann nach der bekannten Strecke (S) vorherberechnet werden, wo die Fahrbahnmarkierungskontraste (16) in der nächsten Aufnahme zu erwarten sind. Aus der ersten Aufnahme wird ein Erwartungsbild (Referenz) für die nächste Aufnahme gebildet.

Wenn sich Kontraste im Erwartungsbild mit der nächsten Aufnahme decken, dann liegen sie auf der Fahrbahnebene (3), wenn sie sich nicht decken, gehören sie evtl. zu einem Objekt. Die Bildung des Erwartungsbildes ist ein einfacher Prozess. Es ist dann nicht mehr erforderlich komplexe Rechenverfahren zu verwenden, wenn man nicht den wahren Ort der Kontraste braucht.

In der Entscheidung, ob die Fahrbahnebene (3) befahrbar ist oder nicht, ist es ausreichend festzustellen, ob die Kontraste zur Fahrbahn gehören oder nicht. Wenn die Disparität zwischen den Aufnahmen zu groß ist, ist es egal, wie hoch oder tief die Kontraste über oder unter der Fahrbahn sind. Das Verfahren ist deutlich einfacher als Verfahren, die den tatsächlichen Ort des Kontrastes berechnen.

Ein Erwartungsbild, das aus der zweiten Aufnahme gebildet wird, kann als Referenz für die dritte Aufnahme usw. verwendet werden. Bedingt durch den Fahrbahnverlauf kann es natürlich Abweichungen von dem zweiten Erwartungsbild zum ersten Erwartungsbild geben. Translatorische und rotatorische Verschiebungen können möglich sein.

Vorteilhaft in dieser Anwendung ist auch die Verwendung von Stereokameras. Wenn die Stereokamera aus einer rechten und einer linken Kamera besteht, können insbesondere Kontraste, die in Fahrtrichtung längs laufen zuverlässig in ihrer Entfernung bestimmt werden. Dagegen werden mit Aufnahmen, die zeitlich nacheinander erfolgen, insbesondere Kontraste, die quer laufen, besser in der Entfernung bestimmt, wenn das Fahrzeug etwas weiter gefahren ist. Insofern ist die Kombination von Stereokamera und Auswertung von verschiedenen Aufnahmen bei Weiterfahrt von Vorteil.

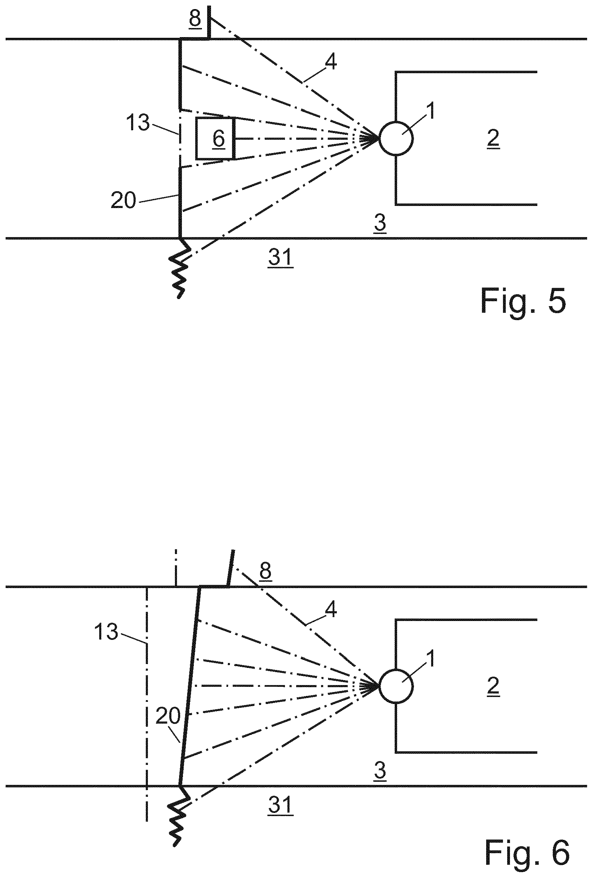

In der Figur 5 wird in Verbindung mit den Figuren 1 bis 4 das Verfahren näher erläutert. Diese zeigt in der Draufsicht das Fahrzeug (2) auf der Fahrbahnebene (3) vor einem Objekt (6). Mit dem Sensor (1) (z.B. Laserscanner) wird über die einzelnen Scanstrahlen (4) eine Laserlinie (20) abgetastet. Ohne Objekt (6) würde die Laserlinie (20) in der erwarteten Referenzlinie (13) verlaufen. Über dem bekannten Bordstein (8) ist die Scanlinie etwas kürzer als auf der Fahrbahnebene (3). Der erwartete Sprung an dem Bordstein (8) kann auch zur Navigation genutzt werden, also zur Führung des Fahrzeugs (2).

Auf der anderen Seite der Fahrbahnebene (3) ist ein Seitenstreifen (31) zu sehen. Z.B. kann bei Grasbewuchs die Textur eine andere sein, als auf der Fahrbahnebene (3). Somit ist auch der Seitenstreifen (31) detektiert und kann ebenfalls zur Spurführung genutzt werden oder könnte auch als Hindernis bewertet werden.

Eindeutig wird das Objekt (6) als Hindernis erkannt. Die Scanstrahlen (4) sind an dieser Stelle deutlich kürzer als erwartet. Wenn an Stelle des Objektes (6) eine Referenzlinie (13) von z.B. 3m zu erwarten wäre und in der Entfernung eine Toleranz von vielleicht +-0,4m zugestanden wird, das Objekt (6) aber in einer geringeren Entfernung von 2,5m erkannt wird, dann ist das Objekt (6) auch ein Hindernis. Dagegen können die Rauigkeiten auf dem Seitenstreifen (31) so gering sein, dass sie noch innerhalb der Toleranz von 0,4m liegen evtl. nicht als Hindernis erkannt werden. Die Analyse der Textur kann als Unterscheidungsmerkmal genutzt werden, also zur Erkennung von Objekten und Ebenen etc..

Der Sensor (1) befindet sich in einer gewissen Höhe und schaut schräg auf die Fahrbahnebene (3). Es ist zu erkennen, dass die äußeren Scanstrahlen (4) auf der Fahrbahnebene (3) länger sind, als die inneren Scanstrahlen (4), wenn sie auf die Referenzlinie (13) treffen. Unter Berücksichtigung der Höhe des Sensors (1) über der Fahrbahnebene (3) und der Neigung des Sensors (1), lässt sich zurückrechnen, dass die Referenzlinie (13) mehr oder weniger je nach Ebenheit der Fahrbahnebene (3) eine Gerade sein soll. Die gescannte Laserlinie (20) (Ist-Werte) muss an sich innerhalb der Toleranz bleiben. An dem Objekt (6) wird die Toleranz überschritten. Hier kann auch eine Filterung einsetzen. Sollte nur eine einzelne Messung die Toleranz überschreiten, kann es sich z.B. um die Detektion einer Schneeflocke, eines Regentropfens oder eines Staubpartikels handeln. Es ist dann vorteilhafter zu sehen, ob mehrere benachbarte Entfernungsmessungen die gleiche Abweichung zeigen oder ob bei dem nächstfolgenden Scan diese Abweichungen wieder gemessen werden. Das Objekt (6) muss sich dann gewissermaßen durch eine gewisse Breite und auch zeitliche Beständigkeit zu erkennen geben.

Bei dem Sensor (1) kann es sich z.B. um einen Laserscanner, eine Stereokamera, eine andere laufzeitmessende Einrichtung, aber auch um einen Musterprojektor mit Kamera (auch Lichtschnittverfahren) handeln. Die Muster können Punkte, Linien, Gitter usw. sein. Eine querverlaufende Projektionslinie könnte der Laserlinie (20) entsprechen. Lichtschnittverfahren sind bei geringen Entfernungen im Innenbereich gut geeignet. Sie können dann bspw. auch Unterschiede in der Fahrbahnebene (3) gut erkennen bspw. einen Teppichboden von einem Parkettboden unterscheiden.

Es wird deutlich, dass die Verwendung von verschiedenen Verfahren in der Bewertung der Fahrbahnebene hilft. So können schon Helligkeitsunterschiede (Schwarz- weiß Kamera) oder auch Fahrbahnunterschiede zwischen Fahrbahnebene (3), Bordstein (8), Seitenstreifen (31) und Objekt (6) die entfernungsbasierten Messungen erheblich unterstützen und bestätigen, insbesondere dann, wenn die Differenzen in der Entfernung zu unsicher oder zu gering sind.

In der Figur 6 ist eine gegenüber der Figur 5 abweichende Betriebssituation dargestellt. Das Fahrzeug (2) soll mit dem Sensor (1) an sich die Referenzlinie (13) scannen. Tatsächlich verläuft die Laserlinie (20) jedoch in einem kürzeren Abstand und schräg. Das kann daran liegen, dass das Fahrzeug (2) zur Fahrbahnebene genickt und gewankt ist, möglicherweise durch einen Bremsvorgang oder eine einseitige Beladung. Es kann auch sein, dass die Fahrbahnebene (3) etwas ansteigt oder einseitig Gefälle hat. Möglicherweise wäre jetzt die zulässige Toleranz gegenüber der Referenzlinie (13) überschritten. Trotzdem ist die Situation nicht als Gefahrensituation zu beurteilen, da die Laserlinie (20) auf der Fahrbahnebene (3) immer noch eine Gerade bildet. Es ist in dieser Geraden keine Unterbrechung oder Unstetigkeitsstelle zu erkennen.

Auch ein quer über der Fahrbahnebene (3) liegende Balken würde die Geradenbedingung erfüllen, obwohl er ein Hindernis darstellt. Deshalb wäre es dann vorteilhafter, mit mehreren Scanlinien, vielleicht auch mit Projektion eines Gitters, festzustellen, dass die Fahrbahnebene (3) größtenteils vorhanden ist, aber eine querverlaufende Unterbrechung vorliegt. Querlaufende Hindernisse können auch mit einem querscannenden Sensor (1) erkannt werden, wenn während der Fahrt mehrere Messungen durchgeführt werden und dabei eine unzulässige Zu- und Abnahme der Entfernung festgestellt wird, ggf. auch unter Berücksichtigung des Nickens des Fahrzeugs (2).

Während Fig. 5 darstellt wie durch absolute Entfernungsmessungen Hindernisse erkannt werden, zeigt Fig. 6, dass die Ebenheit auch erkannt wird, selbst wenn die Toleranzen in der Entfernung überschritten werden. Erst wenn die Geradengleichung unzulässig überschritten wird, wäre in der Laserlinie (20) ein Objekt oder Hindernis erkannt.

## Patentansprüche

1. Verfahren zur Erfassung und Bewertung einer Ebene zur Hinderniserkennung von Objekten (6), bei dem mittels eines insbesondere an einem Fahrzeug (2) angeordneten Sensors (1) ein in Richtung einer relativen Bewegungsrichtung, insbesondere einer Fahrtrichtung vorhandenes Objekt (6, 14) erfasst wird, wobei der Sensor (1) auf die Ebene gerichtet und mittels einer Steuereinheit die Entfernung (y) des Sensors (1) von zumindest einem Messpunkt ermittelt wird, **wobei** die so ermittelten Ist-Werte der Entfernung (y) mit einem Referenzwert als Soll-Wert verglichen werden, der sich daraus ergibt, dass der Scanstrahl (5) des Sensors (1) in einer zu erwartenden Entfernung (y) auf die Fahrbahnebene (3) trifft, die sich durch die Trigonometrie ergibt, und dass bei einer Abweichung des Ist-Wertes von dem Soll-Wert der Differenzwert einer Bewertung entweder als Objekt (6), Hindernis (9), Loch (10), Schwebeteil (11), Fehler in der Fahrbahnebene (3) oder dergleichen oder als Messfehler zugeführt wird und wobei zusätzlich zu der Entfernungsmessung der Ebene mittels eines weiteren Sensors ein in der Bewegungsrichtung positioniertes Objekt (6) erfasst wird, **dadurch gekennzeichnet, dass** eine verzögerungs- und/oder beschleunigungsbedingte Neigung des Fahrzeuges (2) als Differenzwert erfasst und von der Steuereinheit mit Geschwindigkeitsmessignalen verglichen wird.

2. Verfahren nach den Anspruch1, **dadurch gekennzeichnet, dass** zur Prüfung und/oder Kalibrierung der gemessene Ist-Wert mit dem Referenzwert verglichen wird.

3. Verfahren nach zumindest einem der vorhergehenden Ansprüche, **dadurch gekennzeichnet, dass** mittels des Sensors (6, 14) weitere Ist-Werte quer zur Fahrtrichtung erfasst werden.

4. Verfahren nach zumindest einem der vorhergehenden Ansprüche, **dadurch gekennzeichnet, dass** aufgrund der Ist-Werte eine Fläche bestimmt und Abweichungen von einer Ebene ermittelt werden.

5. Verfahren nach zumindest einem der vorhergehenden Ansprüche, **dadurch gekennzeichnet, dass** die erfassten Messwerte der Entfernung (y) mit vorhergehenden Messwerten verglichen und daraus Unstetigkeitsstellen bestimmt werden.

6. Verfahren nach zumindest einem der vorhergehenden Ansprüche, **dadurch gekennzeichnet, dass** der Sensor (6, 14) relativ zu dem Fahrzeug (2) in zumindest zwei unterschiedlichen Arbeitspositionen einstellbar und/oder beweglich, insbesondere schwenkbeweglich, angeordnet ist.

7. Verfahren nach zumindest einem der vorhergehenden Ansprüche, **dadurch gekennzeichnet, dass** die Entfernungsmessung unter Berücksichtigung der Relativbewegung, insbesondere der Geschwindigkeit des Fahrzeuges (2), aus der Nachverfolgung von Kontrasten und/oder anderen charakteristischen Merkmalen ermittelt wird.

8. Verfahren nach zumindest einem der vorhergehenden Ansprüche, **dadurch gekennzeichnet, dass** die Entfernung (y) zu Kontrasten ermittelt wird.

9. Verfahren nach zumindest einem der vorhergehenden Ansprüche, **dadurch gekennzeichnet, dass** die Kontraste und/oder Merkmale durch optische Projektion auf die Ebene (z) erzeugt werden.

10. Verfahren nach zumindest einem der vorhergehenden Ansprüche, **dadurch gekennzeichnet, dass** die Farbe und/oder die Helligkeit der Ebene geprüft wird.

11. Verfahren nach zumindest einem der vorhergehenden Ansprüche, **dadurch gekennzeichnet, dass** die Entfernungsmessung für unterschiedliche Winkel der Messrichtung gegenüber der Ebene durchgeführt wird.

12. Verfahren nach zumindest einem der vorhergehenden Ansprüche, **dadurch gekennzeichnet, dass** die Entfernungsmessung durch mehrere Sensoren (6, 14) durchgeführt wird, deren Messrichtungen einen Winkel (18, 19) einschließen.

13. Verfahren nach zumindest einem der vorhergehenden Ansprüche, **dadurch gekennzeichnet, dass** zumindest ein weiterer Sensor zur Erfassung von Objekten (6, 14) in unterschiedlichen Sicherheitsbereichen vorgesehen ist.

14. Verfahren nach zumindest einem der vorhergehenden Ansprüche, **dadurch gekennzeichnet, dass** zumindest ein weiterer Sensor zur Erfassung der Ebenen für die Quer- und/oder Kurvenfahrt verwendet wird.

15. Verfahren nach zumindest einem der vorhergehenden Ansprüche, **dadurch gekennzeichnet, dass** die Oberflächenbeschaffenheit, insbesondere die Rauigkeit erfasst und mit Datensätzen einer Datenbank verglichen wird, um so eine Unterscheidung der Oberfläche der Fahrbahn gegenüber einem Objekt (6, 14) zu erreichen.

16. Verfahren nach zumindest einem der vorhergehenden Ansprüche, **dadurch gekennzeichnet, dass** bei einem von einem Soll-Wert abweichenden Messwert das Fahrzeug (z) verzögert und/oder die Weiterfahrt unterbrochen wird.

17. Verfahren nach zumindest einem der vorhergehenden Ansprüche, **dadurch gekennzeichnet, dass** bei Feststellung eines Hindernisses (9) die Geschwindigkeit kontrolliert verzögert wird.

18. Verfahren nach zumindest einem der vorhergehenden Ansprüche, **dadurch gekennzeichnet, dass** zur Überprüfung der Verzögerung ein Beschleunigungssensor verwendet wird.

19. Verfahren nach zumindest einem der vorhergehenden Ansprüche, **dadurch gekennzeichnet, dass** der Betrag der Verzögerung auf einen vorbestimmten Betriebsgrenzwert begrenzt wird und lediglich dann, wenn durch die mit dem Betriebsgrenzwert erreichbare Verzögerung in Bezug auf die gemessene Entfernung (y) ein Mindestabstand von dem Objekt (6, 14) nicht gewährleistet ist, eine über den Betriebsgrenzwert hinausgehende, insbesondere maximale Verzögerung eingestellt wird.

20. Verfahren nach zumindest einem der vorhergehenden Ansprüche, **dadurch gekennzeichnet, dass** die Messwerte einer Bewertung unterzogen und gegebenenfalls einzelne Messwerte von einer weiteren Signalverarbeitung ausgeschlossen werden.

21. Verfahren nach zumindest einem der vorhergehenden Ansprüche, **dadurch gekennzeichnet, dass** die Stereotechnik verwendet wird und zum Vergleich der Aufnahmen bekannte Disparitäten berücksichtigt werden.

22. Verfahren nach zumindest einem der vorhergehenden Ansprüche, **dadurch gekennzeichnet, dass** die erfassten Messwerte in Bezug auf eine erste Position als Referenzwerte genutzt werden und als Vergleichswerte für die erfassten Messwerte in Bezug auf eine zweite Position verwendet werden.

23. Verfahren nach zumindest einem der vorhergehenden Ansprüche, **dadurch gekennzeichnet, dass** für die Messwerterfassung laufzeitmessende und/oder bilderfassende Sensoren (1) verwendet werden.

24. Verfahren nach zumindest einem der vorhergehenden Ansprüche, **dadurch gekennzeichnet, dass** eine Ebene zur Referenzbildung erfasst wird.

25. Verfahren nach zumindest einem der vorhergehenden Ansprüche, **dadurch gekennzeichnet, dass** eine Ebene mit zumindest zwei einander schneidenden Messlinien erfasst wird.

26. Verfahren nach zumindest einem der vorhergehenden Ansprüche, **dadurch gekennzeichnet, dass** die erfassten Messwerte sowohl mit absoluten Referenzwerten als auch mit Messwerten benachbarter Messpunkte verglichen werden.

## Claims

1. Method for capturing and assessing a plane for the obstacle detection of objects (6), in which an object (6, 14) present in the direction of a relative direction of movement, in particular a direction of travel, is captured by means of a sensor (1) which is arranged, in particular, on a vehicle (2), wherein the sensor (1) is aimed at the plane and the distance (y) between the sensor (1) and at least one measuring point is determined by means of a control unit, **wherein** the actual values of the distance (y) which are determined in this manner are compared with a reference value as a desired value which results from the fact that the scanning beam (5) of the sensor (1) strikes the road plane (3) at an expected distance (y) which results from trigonometry, and, if the actual value deviates from the desired value, the difference value is supplied to an assessment either as an object (6), an obstacle (9), a hole (10), a floating part (11), an error in the road plane (3) or the like or as a measurement error, and wherein an object (6) positioned in the direction of movement is captured, in addition to the distance measurement of the plane, by means of a further sensor, **characterized in that** a deceleration-related and/or acceleration-related inclination of the vehicle (2) is captured as a difference value and is compared with speed measurement signals by the control unit.

2. Method according to Claim 1, **characterized in that,** for testing and/or calibration, the measured actual value is compared with the reference value.

3. Method according to at least one of the preceding claims, **characterized in that** further actual values transverse to the direction of travel are captured by means of the sensor (6, 14).

4. Method according to at least one of the preceding claims, **characterized in that** an area is determined on the basis of the actual values and deviations from a plane are determined.

5. Method according to at least one of the preceding claims, **characterized in that** the captured measured values of the distance (y) are compared with previous measured values and discontinuity points are determined therefrom.

6. Method according to at least one of the preceding claims, **characterized in that** the sensor (6, 14) is arranged in an adjustable and/or movable, in particular pivotably movable, manner relative to the vehicle (2) in at least two different operating positions.

7. Method according to at least one of the preceding claims, **characterized in that** the distance measurement is determined from the tracking of contrasts and/or other characteristic features taking into account the relative movement, in particular the speed of the vehicle (2).

8. Method according to at least one of the preceding claims, **characterized in that** the distance (y) to contrasts is determined.

9. Method according to at least one of the preceding claims, **characterized in that** the contrasts and/or features are produced by means of optical projection onto the plane (z).

10. Method according to at least one of the preceding claims, **characterized in that** the colour and/or the brightness of the plane is/are checked.

11. Method according to at least one of the preceding claims, **characterized in that** the distance measurement is carried out for different angles of the measuring direction with respect to the plane.

12. Method according to at least one of the preceding claims, **characterized in that** the distance measurement is carried out by a plurality of sensors (6, 14), the measuring directions of which enclose an angle (18, 19).

13. Method according to at least one of the preceding claims, **characterized in that** at least one further sensor is provided for the purpose of capturing objects (6, 14) in different safety areas.

14. Method according to at least one of the preceding claims, **characterized in that** at least one further sensor is used to capture the planes for travelling in the transverse direction and/or cornering.

15. Method according to at least one of the preceding claims, **characterized in that** the surface condition, in particular the roughness, is captured and is compared with data records in a database in order to thus distinguish the surface of the road from an object (6, 14).

16. Method according to at least one of the preceding claims, **characterized in that** the vehicle (z) is decelerated and/or the onward journey is interrupted in the case of a measured value which deviates from a desired value.

17. Method according to at least one of the preceding claims, **characterized in that** the speed is decelerated in a controlled manner if an obstacle (9) is determined.

18. Method according to at least one of the preceding claims, **characterized in that** an acceleration sensor is used to check the deceleration.

19. Method according to at least one of the preceding claims, **characterized in that** the magnitude of the deceleration is limited to a predetermined operating limit value and a deceleration which goes beyond the operating limit value, in particular a maximum deceleration, is set only when a minimum distance from the object (6, 14) is not ensured by the deceleration which can be achieved with the operating limit value with respect to the measured distance (y).

20. Method according to at least one of the preceding claims, **characterized in that** the measured values are subjected to an assessment and individual measured values are possibly excluded from further signal processing.

21. Method according to at least one of the preceding claims, **characterized in that** stereo technology is used and known disparities are taken into account for the purpose of comparing the recordings.

22. Method according to at least one of the preceding claims, **characterized in that** the captured measured values with respect to a first position are used as reference values and are used as comparison values for the captured measured values with respect to a second position.

23. Method according to at least one of the preceding claims, **characterized in that** transit-time-measuring and/or image-capturing sensors (1) are used to capture the measured values.

24. Method according to at least one of the preceding claims, **characterized in that** a plane for reference formation is captured.

25. Method according to at least one of the preceding claims, **characterized in that** a plane having at least two intersecting measuring lines is captured.

26. Method according to at least one of the preceding claims, **characterized in that** the captured measured values are compared both with absolute reference values and with measured values of adjacent measuring points.

## Revendications

1. Procédé de détection et d'évaluation d'un plan servant à la reconnaissance d'obstacles sous forme d'objets (6), avec lequel un objet présent (6, 14) dans le sens d'un sens de déplacement relatif, notamment un sens de circulation, est détecté au moyen d'un capteur (1) notamment disposé sur un véhicule (2), le capteur (1) étant dirigé sur le plan et la distance (y) entre le capteur (1) et au moins un point de mesure étant déterminée au moyen d'une unité de commande, les valeurs réelles de la distance (y) ainsi déterminées étant comparées à une valeur de référence faisant office de valeur de consigne, laquelle est obtenue en ce que le rayon de balayage (5) du capteur (1) vient frapper le plan de la voie de circulation (3), lequel est obtenu par trigonométrie, à une distance (y) attendue, et en ce qu'en cas de différence entre la valeur réelle et la valeur de consigne, la valeur différentielle est acheminée à une évaluation soit en tant qu'objet (6), obstacle (9), trou (10), pièce en suspension (11), défaut dans le plan de la voie de circulation (3) ou similaire, soit en tant qu'erreur de mesure, et un objet (6) positionné dans le sens du déplacement étant détecté au moyen d'un capteur supplémentaire en plus de la mesure de distance du plan, **caractérisé en ce qu'**une inclinaison du véhicule (2) liée au ralentissement et/ou à l'accélération est détectée comme une valeur différentielle et comparée par l'unité de commande à des signaux de vitesse.

2. Procédé selon la revendication 1, **caractérisé en ce que** la valeur réelle mesurée est comparée à la valeur de référence à des fins de contrôle et/ou d'étalonnage.

3. Procédé selon au moins l'une des revendications précédentes, **caractérisé en ce que** des valeurs réelles supplémentaires sont détectées transversalement au sens de circulation au moyen du capteur (6, 14).

4. Procédé selon au moins l'une des revendications précédentes, **caractérisé en ce qu'**une surface est définie et les écarts d'un plan sont déterminés en se basant sur les valeurs réelles.

5. Procédé selon au moins l'une des revendications précédentes, **caractérisé en ce que** les valeurs mesurées acquises de la distance (y) sont comparées à des valeurs mesurées précédentes et des points de discontinuité sont définis à partir de cette comparaison.

6. Procédé selon au moins l'une des revendications précédentes, **caractérisé en ce que** le capteur (6, 14) est monté réglable et/ou mobile, notamment mobile en pivotement, par rapport au véhicule (2) dans au moins deux positions de travail différentes.

7. Procédé selon au moins l'une des revendications précédentes, **caractérisé en ce que** la mesure de distance est déterminée en tenant compte du déplacement relatif, notamment de la vitesse du véhicule (2), à partir du suivi des contrastes et/ou d'autres propriétés caractéristiques.

8. Procédé selon au moins l'une des revendications précédentes, **caractérisé en ce que** la distance (y) est déterminée par rapport à des contrastes.

9. Procédé selon au moins l'une des revendications précédentes, **caractérisé en ce que** les contrastes et/ou les propriétés sont générés par projection optique sur le plan (z).

10. Procédé selon au moins l'une des revendications précédentes, **caractérisé en ce que** la couleur et/ou la luminosité du plan sont contrôlées.

11. Procédé selon au moins l'une des revendications précédentes, **caractérisé en ce que** la mesure de distance est effectuée pour différents angles de la direction de mesure par rapport au plan.

12. Procédé selon au moins l'une des revendications précédentes, **caractérisé en ce que** la mesure de distance est effectuée par plusieurs capteurs (6, 14) dont les directions de mesure incluent un angle (18, 19).

13. Procédé selon au moins l'une des revendications précédentes, **caractérisé en ce qu'**il existe au moins un capteur supplémentaire destiné à détecter des objets (6, 14) dans des zones de sécurité différentes.

14. Procédé selon au moins l'une des revendications précédentes, **caractérisé en ce qu'**au moins un capteur supplémentaire est utilisé pour détecter les plans pour la circulation transversale et/ou en virage.

15. Procédé selon au moins l'une des revendications précédentes, **caractérisé en ce que** la nature de la surface, notamment la rugosité, est détectée et comparée à des jeux de données d'une base de données afin d'obtenir ainsi une différenciation entre la surface de la voie de circulation et un objet (6, 14).

16. Procédé selon au moins l'une des revendications précédentes, **caractérisé en ce qu'**en présence d'une valeur mesurée différente d'une valeur de consigne, le véhicule (z) est ralenti et/ou la poursuite de la circulation est interrompue.

17. Procédé selon au moins l'une des revendications précédentes, **caractérisé en ce que** lorsqu'un obstacle (9) est constaté, la vitesse est ralentie de manière maîtrisée.

18. Procédé selon au moins l'une des revendications précédentes, **caractérisé en ce qu'**un capteur d'accélération est utilisé pour contrôler le ralentissement.

19. Procédé selon au moins l'une des revendications précédentes, **caractérisé en ce que** le montant du ralentissement est limité à une valeur limite opérationnelle prédéfinie et un ralentissement allant au-delà de la valeur limite opérationnelle, notamment maximal, n'est réglé que lorsque le ralentissement qui peut être atteint avec la valeur limite opérationnelle en référence à la distance (y) mesurée ne permet pas de garantir un écart minimal de l'objet (6, 14).

20. Procédé selon au moins l'une des revendications précédentes, **caractérisé en ce que** les valeurs mesurées sont soumises à une évaluation et des valeurs mesurées individuelles sont éventuellement exclues d'un traitement de signal supplémentaire.

21. Procédé selon au moins l'une des revendications précédentes, **caractérisé en ce que** la technique stéréoscopique est utilisée et les disparités connues sont prises en compte pour la comparaison des enregistrements.

22. Procédé selon au moins l'une des revendications précédentes, **caractérisé en ce que** les valeurs mesurées acquises en référence à une première position sont utilisées en tant que valeurs de référence et sont utilisées comme valeurs comparatives pour les valeurs de mesure acquises en référence à une deuxième position.

23. Procédé selon au moins l'une des revendications précédentes, **caractérisé en ce que** des capteurs (1) d'acquisition du temps de propagation et/ou d'acquisition d'images sont utilisés pour l'acquisition des valeurs mesurées.

24. Procédé selon au moins l'une des revendications précédentes, **caractérisé en ce qu'**un plan est détecté en vue de former une référence.

25. Procédé selon au moins l'une des revendications précédentes, **caractérisé en ce qu'**un plan ayant au moins deux lignes de mesure qui se croisent mutuellement est détecté.

26. Procédé selon au moins l'une des revendications précédentes, **caractérisé en ce que** les valeurs mesurées acquises sont comparées à la fois à des valeurs de référence absolues et à des valeurs mesurées de points de mesure voisins.
